Europäisches Patentamt

European Patent Office

Office européen des brevets

(19)

(11) Veröffentlichungsnummer: **0 031 797**
**B1**

(12) # EUROPÄISCHE PATENTSCHRIFT

(45) Veröffentlichungstag der Patentschrift:
**27.04.83**

(21) Anmeldenummer: **80810402.0**

(22) Anmeldetag: **17.12.80**

(51) Int. Cl.³: **B 29 B 1/00**, B 29 C 29/00

(54) **Verfahren zur Trennung der Deckbleche einer Metall/Kunststoff/Metall-Verbundplatte vom Kunststoffkern.**

(30) Priorität: **21.12.79 CH 11380/79**

(43) Veröffentlichungstag der Anmeldung:
**08.07.81 Patentblatt 81/27**

(45) Bekanntmachung des Hinweises auf die Patenterteilung:
**27.04.83 Patentblatt 83/17**

(84) Benannte Vertragsstaaten:
**AT BE CH DE FR GB IT LI NL SE**

(56) Entgegenhaltungen:
**DE-A-2 500 126**
**DE-B-2 347 108**

(73) Patentinhaber: **Schweizerische Aluminium AG,
CH-8212 Neuhausen am Rheinfall (CH)**

(72) Erfinder: **Themke, Lothar, Breiti 7, D-7701 Hilzingen (DE)**
Erfinder: **Bindl, Erwin, Posthalterswäldle 93,
D-7700 Singen (DE)**
Erfinder: **Schoch, Kurt, Am Graben 44, D-7700 Singen
(DE)**

ACTORUM AG

Verfahren zur Trennung der Deckbleche einer Metall/Kunststoff/Metall-Verbundplatte vom Kunststoffkern

Die Erfindung bezieht sich auf ein Verfahren zur Trennung der Deckbleche einer Metall/Kunststoff/Metall-Verbundplatte vom Kunststoffkern.

Verbundplatten mit Kunststoffkern und metallischen Deckblechen finden heute einen grossen Anwendungsbereich. Ihre Vorzüge liegen unter anderem im geringen Gewicht und in der einfachen Verarbeitbarkeit. Weit verbreitet sind insbesondere Verbundplatten mit einem Kern aus Polyäthylen und Deckblechen aus Aluminium. Diese werden beispielsweise verwendet als Dach- und Fassadenelemente sowie als Wand- und Deckenverkleidungen.

Derartige Verbundwerkstoffe werden heute grösstenteils auf kontinuierlichen Fertigungsanlagen als Band hergestellt und mittels einer mitlaufenden Schere zu Standardformaten geschnitten. Im Verlauf der Produktion sowie beim Zuschnitt der Verbundplatten auf die jeweils gewünschten Endmasse fallen Plattenabschnitte an, die nicht weiter verwendet werden können. Um diesen Produktions- und Zuschnittabfall wieder verwerten zu können, müssen die Deckbleche vom Kunststoffkern abgetrennt werden. Die mechanische Zerkleinerung und Mahlung des Abfalls zu kleinen Partikeln mit anschliessender Windsichtung oder Sink/Schwebe-Trennung wie auch die Trennung von Metall und Kunststoff durch Einwirkung chemischer Agentien haben bis anhin zu keiner wirtschaftlichen Lösung dieses Problems geführt.

Aus der deutschen Offenlegungsschrift DE-A-2.500.126, ist eine Vorrichtung zum Trennen einer Metallfolie von einer Kunststoffbeschichtung bekannt. Sie weist zwei parallel zueinander angeordnete Walzen auf, deren Walzenspalt der Dicke der Metallfolie angepasst ist; beim Durchlauf durch die Walzen wird der Kunststoffanteil des Verbundmaterials in Bohrungen der einen geheizten Walze eingepresst und auf diese Weise von der Metallfolie abgetrennt.

Die Erfinder haben sich nun die Aufgabe gestellt, ein Verfahren zu schaffen, mit welchem auf einfache und wirtschaftliche Weise die Deckbleche einer Metall/Kunststoff/Metall-Verbundplatte vom Kunststoffkern abgetrennt werden könnte.

Erfindungsgemäss wird die Aufgabe dadurch gelöst, dass die Verbundplatte durch den Spalt zweier parallel angeordneter und beheizter Walzen geführt wird, wobei zumindest eine der Walzen angetrieben wird und die Breite des Walzenspaltes geringer ist als die Verbundplattendicke.

Unter dem im Walzenspalt erzeugten Druck auf die Verbundplatte entstehen infolge des unterschiedlichen mechanischen Verformungsverhaltens vom Metall und Kunststoff Scherkräfte im Übergangsbereich zwischen den Deckblechen und dem Kunststoffkern. Die gleichzeitig von den Walzen auf die Verbundplatte übertragene Wärme bewirkt eine lokale Erweichung des Kunststoffs in unmittelbarer Nähe der Deckbleche. Zusätzlich werden die Deckbleche durch die Walzen einer leichten Biegeverformung unterworfen.

Durch das Zusammenwirken dieser drei Faktoren Druck, Wärme und Biegeverformung lösen sich die Deckbleche beim Durchlauf der Verbundplatte durch den Walzenspalt vom Kunststoffkern ab.

Bei einer bevorzugten Durchführung des Verfahrens werden beide Walzen angetrieben. Die Umlaufgeschwindigkeiten der beiden Walzen werden üblicherweise gleich gross gewählt. Sie können aber auch unterschiedlich sein, um dadurch die Scherkräfte im Übergangsbereich zwischen den Deckblechen und dem Kunststoffkern zusätzlich zu erhöhen.

Der bei diesem Verfahren anzuwendende Druck, der über die Walzenspaltbreite eingestellt wird, die Temperatur der Walzen sowie die Geschwindigkeit, mit welcher die Verbundplatte durch den Walzenspalt geführt wird, können in weiten Grenzen variiert werden.

Als vorteilhaft hat sich die Einhaltung der folgenden Bereiche erwiesen:

Walzenspaltbreite: 30 bis 80% der Verbundplattendicke

Walzentemperatur: 50 bis 150°C

Durchlaufgeschwindigkeit der Verbundplatte: 1 bis 20 m/min.

Da die Erweichung des Kunststoffkerns von der Kontaktzeit der Verbundplatte mit den Walzen abhängig ist, erfordert eine höhere Durchlaufgeschwindigkeit naturgemäss eine höhere Walzentemperatur.

Umfangreiche Betriebsversuche an handelsüblichen Verbundplatten mit einem Polyäthylenkern der Dicke 2 bis 8 mm und Deckblechen aus Aluminium der Dicke 0,5 mm haben gezeigt, dass sich innerhalb der oben genannten Vorzugsbereiche für die Walzenspaltbreite, die Walzentemperatur und die Durchlaufgeschwindigkeit die Deckbleche problemlos vom Kunststoffkern ablösen lassen.

Weitere Versuche an Verbundplatten mit einem Polyäthylenkern der Dicke 2 bis 8 mm und Deckblechen aus Stahl der Dicke 0,3 mm sowie an Verbundplatten mit einem Kern aus geschäumtem PVC der Dicke 6 mm und Deckblechen aus Aluminium der Dicke 0,5 mm haben ebenfalls zu positiven Ergebnissen geführt.

Das erfindungsgemässe Verfahren wird nachfolgend anhand einer schematischen Zeichnung näher erläutert.

Eine Vorrichtung zur Durchführung des erfindungsgemässen Verfahrens weist zwei parallel angeordnete, zylindrische Walzen 1, 1' auf, die einen Walzenspalt 2 bilden. Die beiden Walzen 1, 1' die vorzugsweise aus Stahl bestehen und deren Oberflächen gegebenenfalls aufgerauht sind, werden beispielsweise durch direkte Flammenbeaufschlagung der Walzenoberflächen mittels Gasbrennern 3, 3' beheizt. Der Antrieb der Walzen 1, 1' erfolgt mit gleich grosser Umlaufge-

schwindigkeit und mit entgegengesetzter Umlaufrichtung.

Nach Einstellung der gewünschten Walzenspaltbreite – unter Walzenspaltbreite wird der Minimalabstand zwischen den beiden Walzen verstanden –, der Walzentemperatur und der Walzenumlaufgeschwindigkeit wird die Verbundplatte A zwischen die rotierenden Walzen 1, 1' geführt, wo sie von diesen ergrifen und durch den Walzenspalt 2 getrieben wird. Durch die gleichzeitige Einwirkung von Druck, Scherkräften und Wärme lösen sich die Deckbleche 4, 4' beim Durchlauf der Verbundplatte A durch den Walzenspalt 2 vom Kunststoffkern 5 ab.

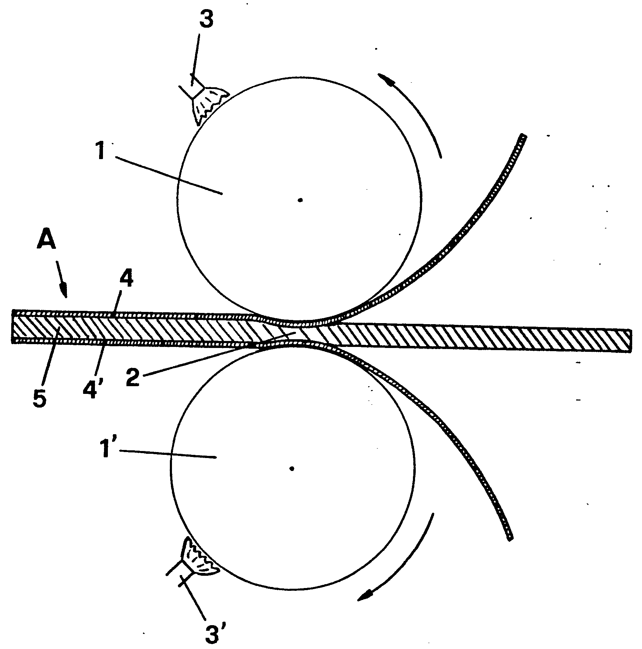

## Patentansprüche

1. Verfahren zur Trennung der Deckbleche (4, 4') einer Metall/Kunststoff/Metall-Verbundplatte (A) vom Kunststoffkern (5), dadurch gekennzeichnet, dass die Verbundplatte (A) durch den Spalt zweier parallel angeordneter und beheizter Walzen (1, 1') geführt wird, wobei zumindest eine der Walzen angetrieben wird und die Breite des Walzenspaltes geringer ist als die Verbundplattendicke.

2. Verfahren nach Anspruch 1, dadurch gekennzeichnet, dass beide Walzen (1, 1') mit gleicher Umlaufgeschwindigkeit angetrieben werden.

3. Verfahren nach Anspruch 1, dadurch gekennzeichnet, dass beide Walzen (1, 1') mit unterschiedlicher Umlaufgeschwindigkeit angetrieben werden.

4. Verfahren nach einem der Ansprüche 1 bis 3, dadurch gekennzeichnet, dass die Walzen (1, 1') eine Temperatur zwischen 50 und 150°C aufweisen.

5. Verfahren nach einem der Ansprüche 1 bis 4, dadurch gekennzeichnet, dass die Breite des Walzenspaltes 30 bis 80% der Verbundplattendicke beträgt.

6. Verfahren nach einem der Ansprüche 1 bis 5, dadurch gekennzeichnet, dass die Verbundplatte (A) mit einer Geschwindigkeit zwischen 1 und 20 m/min durch den Walzenspalt geführt wird.

## Claims

1. Method fo separating the outer sheets (4, 4') of a metal/plastics metal composite panel (A) from a plastics core (5), characterised in that the composite panel (A) is fed through the gap between two parallel, heated rolls (1, 1'), while at least one of the rolls is driven and the width of the roll gap is smaller than the thickness of the composite panel.

2. Method according to claim 1, characterised in that both rolls (1, 1') are driven with the same speed of rotation.

3. Method according to claim 1, characterised in that both rolls (1, 1') are driven with different speeds of rotation.

4. Method according to one of claims 1 to 3, characterised in that the rolls (1, 1') have a temperature between 50 und 150°C.

5. Method according to one of claims 1 to 4, characterised in that the width of the roll gap amounts to 30 to 80% of the thickness of the composite panel.

6. Method according to one of claims 1 to 5, characterised in that the composite panel (A) is fed through the roll gap with a speed between 1 and 20 m/min.

## Revendications

1. Procédé pour séparer les tôles de couverture (4, 4') d'un panneau composite (A) métal/plastique/métal, du cœur (5) en matière plastique, caractérisé en ce que le paneau composite (A) est guidé à travers la fente formée entre deux rouleaux (1, 1') disposés parallèlement et chauffées, au moins l'un des rouleaux étant entraîné et la largeur de la fente formée entre les cylindres étant inférieure à l'épaisseur du panneau composite.

2. Procédé selon la revendication 1, caractérisé en ce que les deux rouleaux (1, 1') sont entraînés à vitesse périphérique égale.

3. Procédé selon la revendication 1, caractérisé en ce que les deux rouleaux (1, 1') sont entraînés à vitesse périphérique différente.

4. Procédé selon l'une quelconque des revendications 1 à 3, caractérisé en ce que les rouleaux (1, 1') présentent une température entre 50 et 150°.

5. Procédé selon l'une quelconque des revendications 1 à 4, caractérisé en ce que la largeur de la fente formée entre les rouleaux atteint 30 à 80% de l'épaisseur du panneau composite.

6. Procédé selon l'une quelconque des revendications 1 à 5, caractérisé en ce que le panneau composite (A) est guidé à travers la fente formée entre les rouleaux à une vitesse dont la valeur est entre 1 et 20 m/min.